(19) Europäisches Patentamt

European Patent Office

Office européen des brevets

(11) **EP 1 016 311 B1**

(12) **EUROPÄISCHE PATENTSCHRIFT**

(45) Veröffentlichungstag und Bekanntmachung des Hinweises auf die Patenterteilung:
**21.04.2004 Patentblatt 2004/17**

(21) Anmeldenummer: **98954122.2**

(22) Anmeldetag: **07.09.1998**

(51) Int Cl.⁷: **H04Q 11/04**, H04L 29/06, G06F 9/44

(86) Internationale Anmeldenummer:
**PCT/DE1998/002623**

(87) Internationale Veröffentlichungsnummer:
**WO 1999/016210 (01.04.1999 Gazette 1999/13)**

(54) **VERFAHREN ZUR STEUERUNG VON DISPLAY-BEDIENOBERFLÄCHEN SYSTEMGESTEUERTER ENDGERÄTE EINES KOMMUNIKATIONSSYSTEMS**

METHOD FOR CONTROLLING DISPLAY OPERATING INTERFACES OF SYSTEM-CONTROLLED TERMINALS IN A COMMUNICATIONS SYSTEM

PROCEDE DE COMMANDE DE SURFACES DE COMMANDE D'AFFICHAGE DE TERMINAUX D'UN SYSTEME DE COMMUNICATION COMMANDES PAR LE SYSTEME

(84) Benannte Vertragsstaaten:
**DE FR GB IT**

(30) Priorität: **19.09.1997 DE 19741473**

(43) Veröffentlichungstag der Anmeldung:
**05.07.2000 Patentblatt 2000/27**

(73) Patentinhaber: **SIEMENS AKTIENGESELLSCHAFT**
**80333 München (DE)**

(72) Erfinder: **HECKER, Hans-Dieter**
**D-81475 München (DE)**

(56) Entgegenhaltungen:
**EP-A- 0 574 006      EP-A- 0 742 676**
**WO-A-95/20859      DE-A- 4 325 096**
**US-A- 5 305 374**

- **CARMINE A: "SCREEN PHONES AND ADSI: THE FIRST INTERNATIONAL COMMUNICATIONS SERVICE SINCE THE FAX MACHINE" PTR PHILIPS TELECOMMUNICATIONS REVIEW, Bd. 52, Nr. 4, Oktober 1995, Seiten 25-29, XP000545040**

**Beschreibung**

Aus "ISDN im Büro", Sonderausgabe telecom report und Siemens-Magazin COM, ISBN 3-8009-3849-9, Siemens AG Berlin und München, insbesondere der Seiten 58 bis 66, ist ein privates Kommunikationssystem bekannt, das neben vermittlungsbezogenen Funktionen zusätzliche Funktionen zur Verfügung stellt. Solche zusätzlichen Funktionen werden im allgemeinen als Leistungsmerkmale bezeichnet, wobei hierbei insbesondere für den Kommunikationsdienst "Sprache" eine große Zahl unterschiedlicher Leistungsmerkmale bekannt sind.

Bei modernen Endgeräten erfolgt die Bedienerführung und die Aktivierung von Leistungsmerkmalen in zunehmenden Maße über eine Bedienoberfläche mit Displaytexten. Bei dem bekannten Kommunikationssystem werden die Displaytexte für die Bedienoberfläche in nur einer voreingestellten Sprache angezeigt. Bei einem Nutzerkreis, der sich aus Teilnehmern mit unterschiedlichen Landessprachen zusammensetzt (z.B. in Hotelanlagen), werden die Displaytexte nur von einem Teil der Nutzer verstanden, was bei modernen Endgeräten zu einer sehr eingeschränkten Nutzungsmöglichkeit führt.

Die Bedienungsanleitung des Endgerätes Gigaset 1000C der Siemens AG beschreibt ein Endgerät mit der im Endgerät implementierten Funktion, das Display des Endgerätes auf verschiedene Landessprachen umzuschalten. Ein solches Kommunikationsendgerät ist auch an dem oben beschriebenen Kommunikationssystem betreibbar, wobei das Kommunikationssystem die Anzeigetexte in einer Landessprache übermittelt und diese dann im Kommunikationsendgerät gegebenenfalls in eine andere Landessprache umgesetzt werden. Diese lokale Lösung ermöglicht aber nur die Auswahl aus einem fest definierten, im Endgerät implementierten Satz von Anzeigetexten und Landessprachen. Eine solche Lösung ist sowohl teuer, als auch unflexibel, da sowohl Änderungen des Anzeigetext-Satzes, als auch das Hinzufügen zusätzlicher Landessprachen nicht nachträglich möglich ist.

Aus der deutschen Offenlegungsschrift DE 43 25 096 A1 ist ein Datenverarbeitungssystem bestehend aus einem Zentralrechner und mehreren Benutzereinheiten bekannt, bei dem ein im Rahmen eines Anwendungsprogramms erfolgender Dialog zwischen den einzelnen Benutzereinheiten und dem Zentralrechner in mehreren, natürlichen Sprachen ermöglicht wird, wobei die Sprachkomponenten zentral vorgesehen sind. Bei einer Ausführung des Anwendungsprogramms werden diesem zugehörige Nachrichtendateien in einen Speicher des Zentralrechners geladen. Die Nachrichtendateien enthalten dabei die zwischen dem Zentralrechner und den Benutzereinheiten auszutauschenden Nachrichten in jeweils einer natürlichen Sprache. Eine jeweilige Zuordnung der Nachrichtendateien zu einem Anwendungsprogramm erfolgt durch eine im Zentralrechner gespeicherte Verbindungstabelle. Ist eine an einer Benutzereinheit ausgewählte natürliche Sprache nicht verfügbar, werden die Nachrichten automatisch in einer im Zentralrechner konfigurierten Standardsprache übermittelt.

Des weiteren ist aus der internationalen Offenlegungsschrift WO 95/20859 ein Verfahren für eine Vorauswahl einer für Telekommunikationsdienste zu verwendenden natürlichen Sprache bekannt. Hierfür werden zentral in einer KommunikationssystemSpeichereinheit (SCP Database) benutzerspezifische Sprachidentifikatoren gespeichert. Bei einem Zugriff eines Benutzers auf das Kommunikationssystem ausgehend von einem dem Benutzer zugeordneten Terminal wird der gespeicherte Sprachidentifikator aus der Speichereinheit ermittelt und die gewünschten Kommunikationsdienste - z.B. die Auswahl eines Operators oder die Ausgabe von Sprachnachrichten - werden unter Berücksichtigung der ermittelten Sprache veranlaßt. Eine Ermittlung des benutzerspezifischen Sprachidentifikators erfolgt dabei beispielsweise anhand einer übermittelten, den Benutzer identifizierenden Rufnummer oder anhand einer benutzerspezifischen Telefonkartennummer.

Durch das zentrale Vorsehen der Sprachkomponenten sind nachträgliche Änderungen in den Sprachkomponenten leichter und mit geringerem Aufwand realisierbar. Die beschriebenen Verfahren zur Sprachauswahl bieten jedoch keine Möglichkeit die Aufrechterhaltungsdauer einer vorgenommen Spracheinstellung zu variieren.

Der vorliegenden Erfindung liegt die Aufgabe zugrunde, ein flexibleres, preisgünstiges Verfahren anzugeben, welches einem Teilnehmer an einem systemgesteuerten Endgerät eine Bedienoberfläche in einer bevorzugten Landessprache zur Verfügung stellt.

Die Lösung dieser Aufgabe erfolgt erfindungsgemäß mit den Merkmalen des Patentanspruchs 1.

In einem erfindungsgemäßen Kommunikationssystem werden Anzeigetexte für die Display-Bedienoberfläche von Endgeräten in mehreren Landessprachen gespeichert. Durch Betätigen einer Sprachauswahltaste am Endgerät läßt sich die Bedienoberfläche des Endgerätes auf eine der vom Kommunikationssystem angebotenen Landessprachen umschalten.

Die Auswahl der gewünschten Landessprache kann nach unterschiedlichen Verfahrensweisen erfolgen z.B. bei der Anzeige eines Menues an der Display-Bedienoberfläche durch Markierung mit Hilfe von Cursertasten, durch schrittweises Weiterschalten bis zur Anzeige der gewünschten Landessprache oder durch Eingabe eines die gewünschte Landessprache identifizierenden Kennwortes.

Im Kommunikationssystem wird für jedes Endgerät ein Sprachkennzeichen gespeichert, welches die aktuell an der Display-Bedienoberfläche des jeweiligen Endgerätes eingestellte Landessprache identifiziert. Soll aufgrund eines Ereignisses, z.B. eines eintreffenden Rufes, ein Anzeigetext vom Kommunikationssystem an ein Endgerät übermittelt werden, so wird anhand des für dieses Endgerät hinterlegten Sprachkennzeichens ermittelt, welche Landessprache für die Display-Bedienoberfläche dieses Endgerätes eingestellt ist. Der Anzeigetext wird dann in der für die Display-Bedienoberfläche dieses Endgerätes eingestellten Landessprache an das Endgerät übermittelt.

Zusätzlich zum Sprachkennzeichen ist im Kommunikationssystem eine Bereichtigungsinformation für eine temporäre oder statische Sprachauswahl hinterlegt. Im Rahmen einer temporären Sprachauswahl bleibt eine aktuell am Endgerät gewählte Spracheinstellung nur bis zum nächsten Ruhezustand - beispielsweise bis zum Ende des aktuellen Gespräches - erhalten und wird anschließend auf eine eingestellte Vorzugssprache zurückgesetzt. Bei einer statischen Sprachauswahl wird die aktuell eingestellte Sprachauswahl beibehalten und anstelle der Vorzugssprache im Kommunikationssystem gespeichert.

Ein wesentlicher Vorteil des erfindungsgemäßen Verfahrens besteht somit darin, daß durch das Vorsehen einer erfindungsgemäßen Berechtigungsinformation die für ein Endgerät vorgesehene Art - temporär oder statisch - der Sprachauswahl in einfacher Weise an die Umgebung angepaßt werden kann - beispielsweise eine temporäre Sprachauswahl für ein öffentlich zugängliches Endgerät und eine statische Sprachauswahl für ein nur privat zugängliches Endgerät -, in der das Endgerät aufgestellt ist.

In einer vorteilhaften Ausgestaltung der Erfindung ist jedem Anzeigetext ein Textkennzeichen zugeordnet, das den Anzeigetext in den vom Kommunikationssystem angebotenen Landessprachen eindeutig kennzeichnet. Die aktuell an einer Display-Bedienoberfläche eines Endgerätes auszugebenden Anzeigetexte werden zusammen mit den entsprechenden Textkennzeichen endgerätespezifisch in einem Display-Speicher im Kommunikationssystem gespeichert. Wird die Landessprache einer Display-Bedienoberfläche eines Endgerätes in eine andere Landessprache geändert, so werden die bereits angezeigten Texte unter Beibehalten des Textkennzeichens in der neuen Landessprache angezeigt.

Hierzu wird ein Sprachkennzeichen, welches die für die Display-Bedienoberfläche des Endgerätes neu eingestellte Landessprache identifiziert, im Kommunikationssystem gespeichert. Mittels des neu gespeicherten Sprachkennzeichens wird ein neuer Satz von Anzeigetexten ausgewählt, der die an der Display-Bedienoberfläche eines Endgerätes auszugebenden Texte in der neu eingestellten Landessprache beinhaltet. Anhand des Textkennzeichens, das im Display-Speicher zusammen mit dem in der alten Landessprache ausgegebenen Anzeigetext gespeichert ist, kann der gleiche Anzeigetext in der neuen Landessprache aus dem neuen Satz von Anzeigetexten ausgewählt werden. Dieser Anzeigetext wird zur Anzeige an der Display-Bedienoberfläche zum Endgerät übermittelt und zusammen mit dem entsprechenden Textkennzeichen im Display-Speicher gespeichert.

In einer weiteren vorteilhaften Ausgestaltung der Erfindung weist das Kommunikationssystem eine zentrale Steuerung mit einer Datenbasis und mehrere Peripheriemodule auf, wobei jedem Peripheriemodul eine bestimmte Anzahl von Kommunikationsendgeräten zugeordnet ist.

Das die für die Display-Bedienoberfläche eines Endgerätes aktuell eingestellte Landessprache identifizierende Sprachkennzeichen wird dezentral in einem Speicher des Peripheriemoduls gespeichert, dem dieses Endgerät zugeordnet ist. Zusätzlich werden die Sprachkennzeichen endgerätespezifisch in der Datenbasis der zentralen Steuerung hinterlegt.

Dadurch das die endgerätespezifischen Sprachkennzeichen sowohl in der Datenbasis der zentralen Steuerung als auch in den Peripheriemodulen gespeichert sind, kann eine Aktualisierung der bereits an einer Display-Bedienoberfläche eines Endgerätes ausgegebenen Anzeigetexte auf eine neue Landessprache ausschließlich in den Peripheriemodulen realisiert werden, wodurch eine Entlastung der zentralen Steuerung erreicht wird.

In einer weiteren vorteilhaften Ausgestaltung der Erfindung wird in der Datenbasis der zentralen Steuerung endgeräteindividuell ein weiteres Sprachkennzeichen gespeichert, das eine Landessprache, die standardmäßig für die Display-Bedienoberfläche eines Endgerätes eingestellt werden soll identifiziert.

Dadurch kann die Display-Bedienoberfläche eines Endgerätes nach einer Änderung der standardmäßig eingestellten Landessprache durch einen Benutzer automatisch wieder auf die Landessprache zurückgesetzt werden, die beispielsweise von einer möglichst großen Zahl von Benutzern verstanden wird. Durch die zentrale Speicherung des weiteren Sprachkennzeichens kann eine Änderung der standardmäßig eingestellten Landessprache z.B. aufgrund von veränderten Bedingungen auf einfache und schnelle Weise vorgenommen werden.

In einer weiteren vorteilhaften Ausgestaltung der Erfindung kann bei Einhalten gewisser Anmeldevorschriften, wie z.B. der Eingabe einer privaten Identifikationsnummer an einem, einem Teilnehmer nicht zugeordneten Endgerät dieses als zu dem Teilnehmer zugehörig behandelt werden. Anzeigetexte werden daraufhin in der Landessprache an das Endgerät übermittelt, die durch das für das dem Teilnehmer zugeordnete Endgerät gespeicherte Sprachkennzeichen identifiziert wird. Identifiziert sich ein Teilnehmer an einem Endgerät, das einem anderen Kommunikationssystem zugeordnet ist, als das dem Teilnehmer zugeordnete Endgerät, so wird das für das dem Teilnehmer zugeordnete Endgerät gespeicherte Sprachkennzeichen an das andere Kommunikationssystem übermittelt.

Ein Ausführungsbeispiel der Erfindung wird im folgenden anhand der Zeichnung weiter erläutert.

Dabei zeigen:

Fig 1: ein Strukturbild zur schematischen Darstellung der bei einer Durchführung des erfindungsgemäßen Verfahrens beteiligten Funktionseinheiten

Fig 2: eine Darstellung von Anzeigezeigtexten für eine Display-Bedienoberfläche abhängig von unterschiedlichen Aktionen

Fig 3: eine Darstellung von Anzeigezeigtexten für eine Display-Bedienoberfläche abhängig von unterschiedlichen Aktionen

Fig 4: ein Ablaufdiagramm einer Steuerprozedur für die Darstellung der bei einer Änderung der aktuellen Spracheinstellung gemäß einer Weiterbildung der Erfindung ablaufenden Verfahrensschritte

Fig 5: ein Ausführungsbeispiel für eine Speicheraufteilung, wobei aus dem Speicher einzelne Anzeigetexte in unterschiedlichen Landessprachen auswählbar sind

Fig 6: ein Ablaufdiagramm einer Steuerprozedur für die Darstellung der bei einer Beendigung eines Gesprächs gemäß einer Weiterbildung der Erfindung ablaufenden Verfahrensschritte

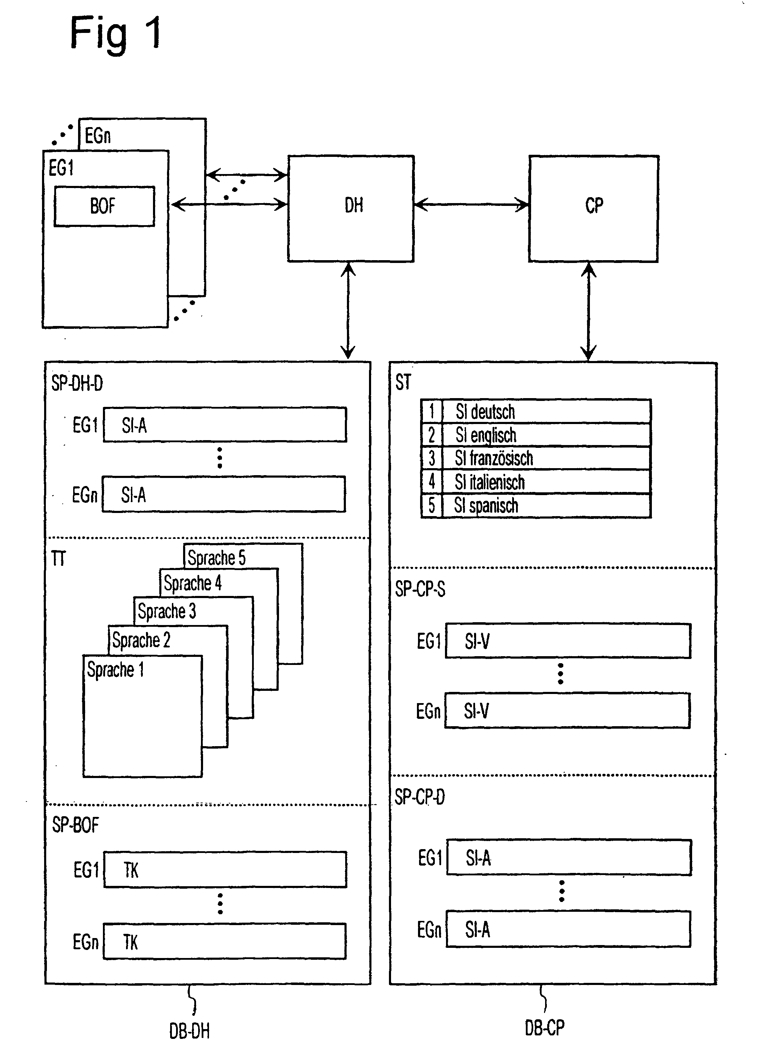

In Fig 1 sind die zur Steuerung einer Display-Bedienoberfläche BOF eines Endgerätes EG wesentlichen Funktionselemente anhand eines Strukturbildes dargestellt. Mehrere Endgeräte EG1,...,EGn mit einer Display-Bedienoberfläche BOF sind über eine Leitungstechnik DH (Device Handler) mit einer Vermittlungstechnik CP (Call Processing) verbunden. Die Leitungstechnik DH greift auf eine Datenbasis DB-DH und die Vermittlungstechnik CP auf eine Datenbasis DB-CP zu.

In der Datenbasis für die Vermittlungstechnik DB-CP sind in einer Sprachentabelle ST Sprachkennzeichen SI gespeichert. Diese Sprachkennzeichen SI identifizieren die vom Kommunikationssystem für eine Anzeige an einer Display-Bedienoberfläche BOF von Endgeräten EG1,...,EGn angebotenen Landessprachen. Im vorliegenden Beispiel werden für die Display-Bedienoberfläche BOF von Endgeräten EG1,...,EGn die Landessprachen Deutsch, Englisch, Französisch, Italienisch und Spanisch zur Auswahl durch das Kommunikationssystem angeboten. Die in der Sprachentabelle ST an erster Position eingetragene Landessprache (Default-Sprache) wird, falls keine anderen Einstellungen vorgenommen werden, als Vorzugssprache für die Display-Bedienoberfläche BOF der Endgeräte EG1,...EGn definiert. Die Datenbasis für die Vermittlungstechnik DB-CP weist weiter einen Speicherbereich für statische Teilnehmerdaten SP-CP-S auf, in dem endgeräteindividuell Sprachkennzeichen SI-V gespeichert sind, die jeweils die für ein Endgerät EG1,...,EGn eingestellte Vorzugssprache identifizieren. In einem Speicherbereich für dynamische Teilnehmerdaten SP-CP-D sind Sprachkennzeichen SI-A gespeichert, die jeweils die an einem Endgerät EG1,..., EGn aktuell eingestellte Landessprache kennzeichnen. Der Speicherbereich SP-CP-D enthält somit entweder das im Speicherbereich SP-CP-V hinterlegte Sprachkennzeichen SI-V für die Vorzugssprache, oder falls ein Teilnehmer die Landessprache für die Display-Bedienoberfläche BOF eines Endgerätes EG geändert hat, das die von dem Teilnehmer eingestellte Landessprache indentifizierende Sprachkennzeichen SI-A.

Die Datenbasis für die Leitungstechnik DB-DH weist zusätzlich zur Datenbasis für die Vermittlungstechnik DB-CP erneut einen Speicherbereich für dynamische Teilnehmerdaten SP-CP-D auf, in dem das die an einem Endgerät EG1, ...,EGn aktuell eingestellte Landessprache identifizierende Sprachkennzeichen SI-A gespeichert ist. Sie enthält außerdem Texttabellen TT in denen Anzeigetexte für die Display-Bedienoberfläche BOF von Endgeräten EG in allen angebotenen Sprachen gespeichert sind. In einem Display-Speicher SP-BOF sind für jedes Endgerät EG Textkennzeichen TK für die aktuell an der Display-Bedienoberfläche BOF des jeweiligen Endgerätes EG auszugebenden Anzeigetexte gespeichert.

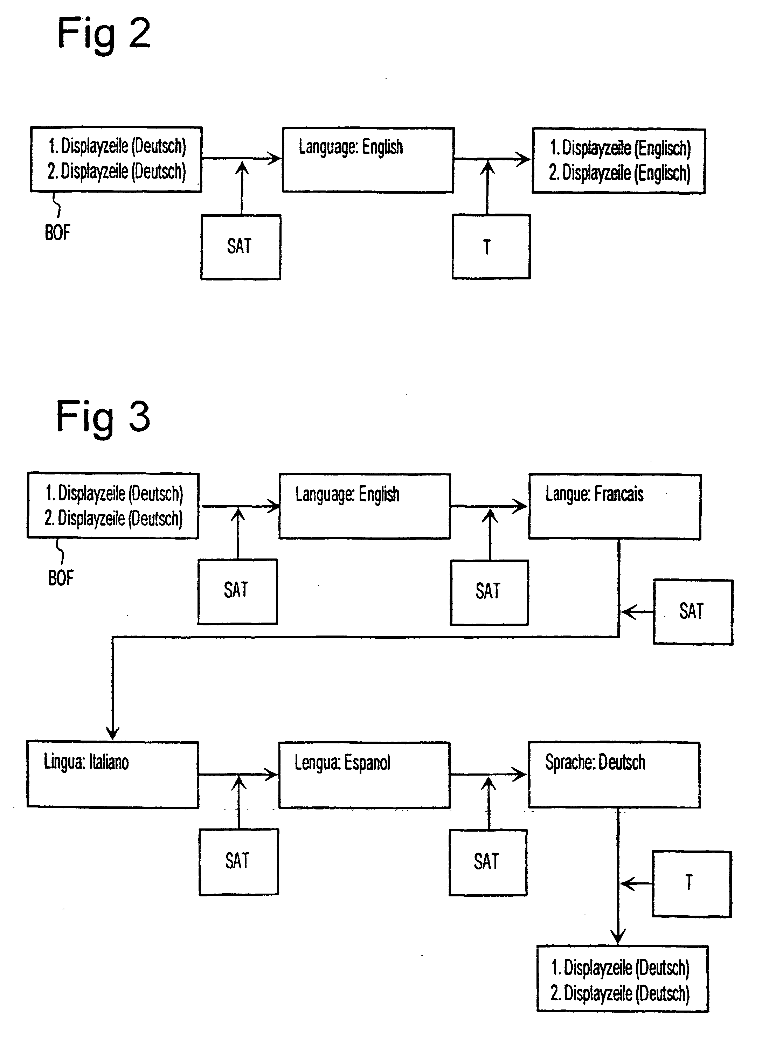

In Fig 2 und Fig 3 werden die bei einer Sprachauswahl an der Display-Bedienoberfläche BOF eines Endgerätes EG ausgegebenen Anzeigetexte dargestellt. Durch das Betätigen einer Sprachauswahltaste SAT am Endgerät EG wird der aktuell an der Display-Bedienoberfläche BOF ausgegebene erste Anzeigetext durch einen zweiten Anzeigetext, der die neu gewählte Landessprache (z.B. "Language: English") bezeichnet, ersetzt. Die Anzeige erfolgt dabei in der neu gewählten Landessprache. Nach Ablauf einer definierten Zeitdauer T (z.B. 5 Sekunden) wird der erste Anzeigetext in der neu gewählten Landessprache angezeigt. Bei der vorliegenden Konfiguration werden die Anzeigetexte an der Display-Bedienoberfläche BOF standardmäßig in Deutsch (Default-Sprache) angezeigt. Bei einmaligem Betätigen der Sprachauswahltaste SAT erscheint an der Display-Bedienoberfläche BOF die Anzeige "Language: English". Nach Ablauf der definierten Zeitdauer T wird der ursprünglich in Deutsch ausgegebenen erste Anzeigetext in Englisch an der Display-Bedienoberfläche BOF ausgegeben.

In einer weiteren Ausführungsform wird die Sprachauswahltaste SAT am Endgerät EG durch eine menüabhängig belegte Auswahltaste ersetzt. In einem Sprachauswahlmenü wird durch Betätigen der menüabhängig belegten Auswahltaste eine Landessprache ausgewählt und die Auswahl gegebenenfalls durch Betätigen einer Ausführungstaste bestätigt.

Bei mehrmaligem Betätigen der Sprachauswahltaste SAT innerhalb der definierten Zeitdauer T erscheinen bei der vorliegenden Konfiguration an der Display-Bedienoberfläche BOF nacheinander die Anzeigen: "Language: English", "Langue: Francais", "Lingua: Italiano", "Lengua: Español" und "Sprache: Deutsch".

Die Auswahl der Landessprache am Endgerät EG verhält sich wie ein endloses Blättern (scrolling) durch die vom Kommunikationssystem angebotenen Landessprachen. Dieses endlose Blättern bietet den Vorteil, daß bei einem versehentlichen Betätigen der Sprachauswahltaste SAT, der Teilnehmer die Möglichkeit hat, durch wiederholtes Betätigen der Sprachauswahltaste SAT den ursprünglich eingestellten Zustand wiederherzustellen.

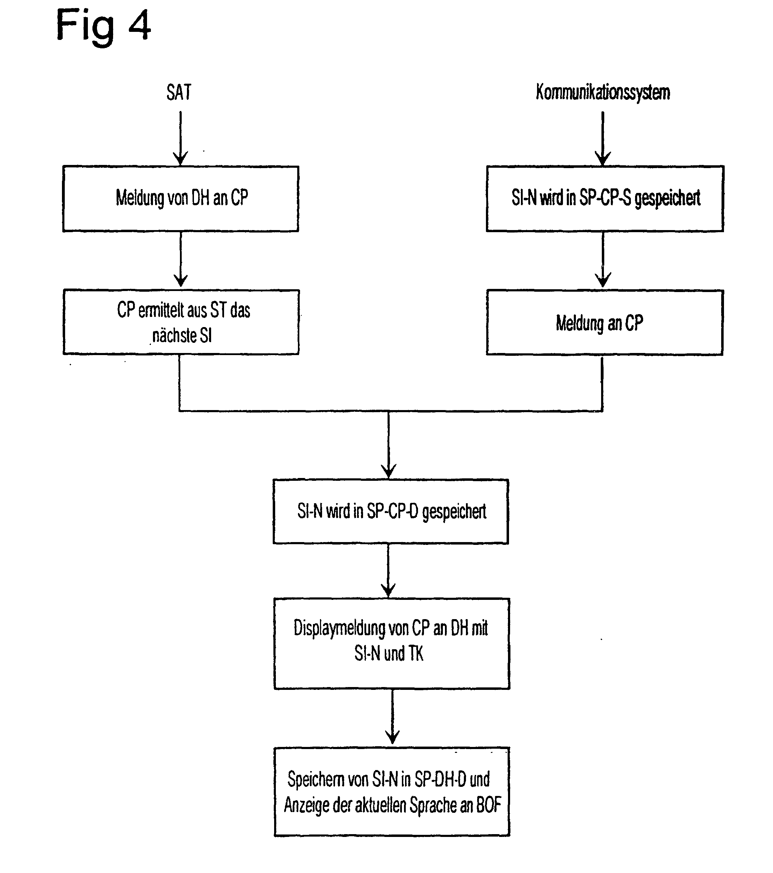

Fig 4 zeigt ein Ablaufdiagramm zur Darstellung der bei einer Änderung der Spracheinstellung ablaufenden Verfahrensschritte. Die aktuell für ein Endgerät EG bestehende Spracheinstellung kann einerseits von einem Teilnehmer durch Betätigen der Sprachauswahltaste SAT am Endgerät EG, andererseits durch ein neues Sprachkennzeichens SI-V für die Vorzugssprache im Kommunikationssystem geändert werden.

Wird an einem Endgerät EG die Sprachauswahltaste SAT betätigt, so wird von der Leitungstechnik DH eine Meldung (Language Selection Key) an die Vermittlungstechnik CP übermittelt. Die Vermittlungstechnik CP ermittelt anhand des für dieses Endgerät EG im Speicher für dynamische Teilnehmerdaten SP-CP-D hinterlegten Sprachkennzeichens SI-A die aktuell am Endgerät EG eingestellte Landessprache. Mittels des Sprachkennzeichens SI-A wird aus der Sprachentabelle ST das nächste verfügbare Sprachkennzeichen SI-N ausgewählt. Ist in der Sprachentabelle ST kein weiterer Eintrag vorhanden, so wird als neues Sprachkennzeichen SI-N das Sprachkennzeichen SI der ersten Landessprache (Default-Sprache) ausgegeben. Das auf diese Weise ermittelte neue Sprachkennzeichen SI-N wird anstelle des alten Sprachkennzeichens SI-A im Speicher für dynamische Teilnehmerdaten SP-CP-D gespeichert. Im nächsten Schritt wird von der Vermittlungstechnik CP eine Displaymeldung an die Leitungstechnik DH übermittelt, die das neue Sprachkennzeichen SI-N und ein Textkennzeichen TK beeinhaltet. Das Textkennzeichen TK adressiert in der Texttabelle TT den aufgrund der Änderung der Landessprache an der Display-Bedienoberfläche BOF des Endgerätes EG auszugebenden Anzeigetext (z.B. "Language: English"). Die Leitungstechnik DH speichert daraufhin das neue Sprachkennzeichen SI-N im Speicher für dynamische Teilnehmerdaten SP-DH-D anstelle des alten Sprachkennzeichens SI-A und leitet eine Aktualisierung der Anzeigetexte für die Display-Bedienoberfläche BOF ein.

Wird für ein Endgerät EG das Sprachkennzeichen SI-V der Vorzugssprache im Speicher für statische Teilnehmerdaten SP-CP-S im Kommunikationssystem geändert, so wird diese Änderung an die Vermittlungstechnik CP gemeldet. Angestoßen durch die Vermittlungstechnik CP laufen die gleichen Verfahrensschritte, wie bei einer Änderung der Landessprache für eine Display-Bedienoberfläche BOF durch Betätigen der Sprachauswahltaste SAT an einem Endgerät EG ab.

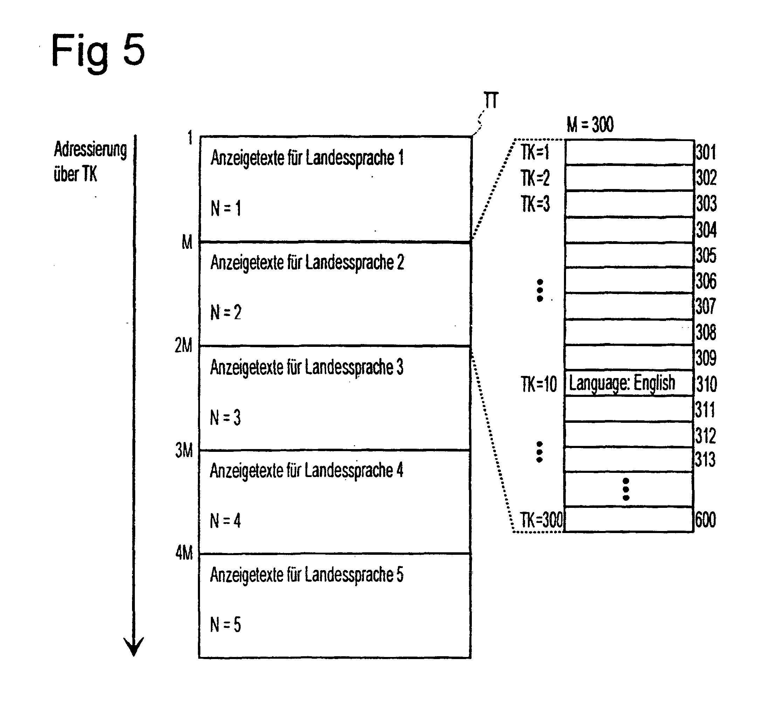

Fig 5 zeigt die Adressierung der Anzeigetexte in der Texttabelle TT über Textkennzeichen TK. Anhand des übermittelten Textkennzeichens TK und der Nummer der aktuell eingestellten Landessprache wird in der Texttabelle TT diejenige Zelle adressiert die den gewünschten Anzeigetext für die Display-Bedienoberfläche BOF enthält. Wird beispielsweise für eine Ausgabe eines neuen Anzeigetextes ("Language: English") von der Vermittlungstechnik CP das Textkennzeichen TK = 10 an die Leitungstechnik DH übergeben, so berechnet die Leitungstechnik DH die Zellenadresse nach folgender Formel:

$$\text{Zellenadresse} = [M \cdot (N\text{-}1)] + TK$$

M: Zahl der Tabelleneinträge pro Sprache (z.B. M = 300)
N: Nummer der aktuell eingestellten Landessprache (z.B. N = 2 für Englisch)
TK: Textkennzeichen (z.B. TK = 10)

Im vorliegenden Beispiel ergibt sich für den englischsprachigen Anzeigentext ("Language: English") mit dem Textkennzeichen TK = 10 die Zellenadresse = 310.

Der auf diese Weise ermittelte Anzeigetexte wird an das Endgerät EG zur Anzeige an der Display-Bedienoberfläche BOF übermittelt und zusammen mit dem Textkennzeichen TK im Display-Speicher SP-BOF gespeichert. Um den aktuell an der Display-Bedienoberfläche BOF angezeigten ersten Text (in der alten Landessprache) in der neu gewählten Landessprache anzuzeigen, wird aus dem Display-Speicher SP-BOF der Datenbasis für die Leitungstechnik DB-DH, das für das entsprechende Endgerät EG hinterlegte Textkennzeichen TK des ersten Anzeigetextes ausgelesen. Anhand dieses Textkennzeichens TK und des im Speicher für dynamische Teilnehmerdaten SP-DH-D hinterlegten aktuellen Sprachkennzeichens SI-A, kann nach dem oben beschriebenen verfahren der erste Anzeigetext in der aktuell ausgewählten Landessprache aus der Texttabelle TT gelesen werden. Dieser wird an das Endgerät EG übermittelt und nach Ablauf der vordefinierten Zeitdauer T an der Display-Bedienoberfläche BOF angezeigt.

Wird die standardmäßig für eine Display-Bedienoberfläche BOF eines Endgerätes EG eingestellte Landessprache geändert, so sind für die Dauer der aktuell eingestellten Spracheinstellung zwei unterschiedliche Betriebsarten vorgesehen.

Bei einer temporären Sprachauswahl bleibt die aktuell gewählte Spracheinstellung nur bis zum nächsten Ruhezustand (z.B. Ende des aktuellen oder des folgenden Gesprächs) erhalten. Anschließend wird die aktuell eingestellte Landessprache der Display-Bedienoberfläche BOF wieder auf die vom System voreingestellte Landessprache zurückgesetzt. Bei einer statischen Sprachauswahl wird die vom Teilnehmer aktuell ausgewählte Spracheinstellung gespeichert und bleibt bis zur nächsten Sprachauswahl durch den Teilnehmer erhalten. Die aktuell gewählte Spracheinstellung ersetzt somit die vom System voreingestellte Landessprache.

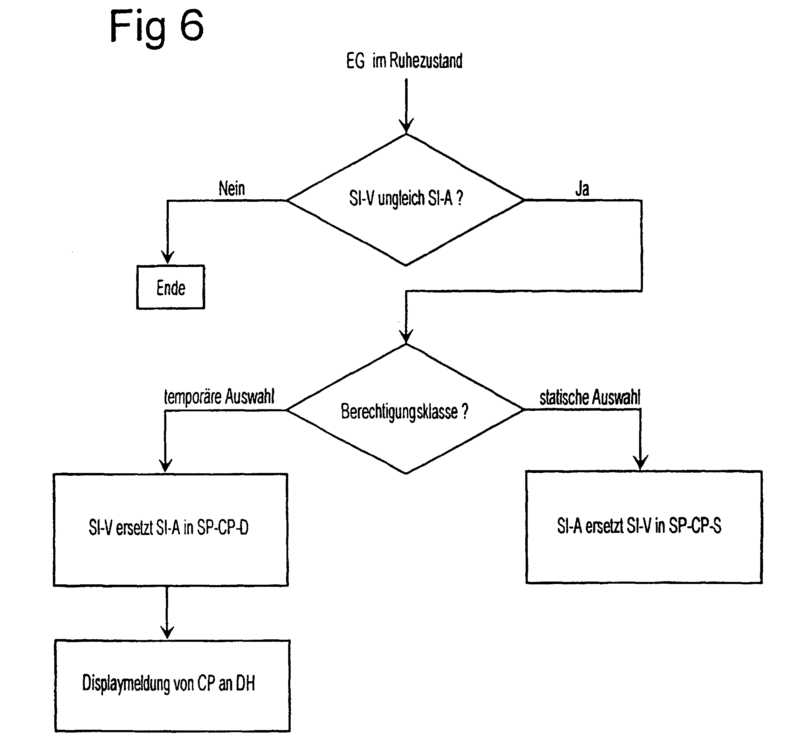

Fig 6 zeigt ein Ablaufdiagramm zur Darstellung der bei Beendigung eines Gesprächs ablaufenden Verfahrensschritte. Befindet sich das Endgerät EG z.B. nach der Beendigung eines Gesprächs in einem Ruhezustand, so wird durch die Vermittlungstechnik CP geprüft, ob sich das im Speicher für statische Teilnehmerdaten SP-CP-S gespeicherte Sprachkennzeichen SI-V für die am Endgerät EG eingestellte Vorzugssprache von dem im Speicher für dynamische Teilnehmerdaten SP-CP-D gespeicherten Sprachkennzeichen SI-A für die am Endgerät EG aktuell eingestellte Landessprache unterscheidet. Ist das nicht der Fall, so werden keine weiteren Aktionen ausgeführt. Stimmen die Sprachkennzeichen SI-V, SI-A nicht überein, so wird eine Unterscheidung getroffen, ob für das entsprechende Endgerät EG eine Berechtigung für eine temporäre oder eine statische Sprachauswahl eingestellt ist.

Bei einer temporären Sprachauswahl wird die Display-Bedienoberfläche BOF des Endgerätes EG auf die Vorzugssprache zurückgesetzt. Dabei wird das Sprachkennzeichen SI-A der aktuell eingestellten Landessprache im Speicher für dynamische Teilnehmerdaten SP-CP-D durch das Sprachkennzeichen SI-V der Vorzugssprache ersetzt. Daraufhin wird eine Displaymeldung von der Vermittlungstechnik CP an die Leitungstechnik DH übermittelt, welche die Vorzugssprache an der Display-Bedienoberfläche BOF des Endgerätes EG in der beschriebenen Weise einrichtet.

Bei einer statischen Sprachauswahl wird das Sprachkennzeichen SI-V im Speicher für statische Teilnehmerdaten SP-CP-S durch das Sprachkennzeichen SI-A der aktuell eingestellen Landessprache ersetzt. Somit wird die aktuell am Endgerät EG eingestellte Landessprache zur Vorzugssprache für das Endgerät EG. Um den Aufwand so gering wie möglich zu halten, wird die Vorzugssprache im Kommunikationssystem nicht bei jeder Aktivierung der Sprachauswahltast SAT aktualisiert, sondern erst nach Freiwerden des Endgerätes EG.

**Patentansprüche**

1. Verfahren zur Steuerung von Display-Bedienoberflächen (BOF) systemgesteuerter Endgeräte (EG) eines Kommunikationssystems,
   wobei in dem Kommunikationssystem Anzeigetexte für die Display-Bedienoberfläche (BOF) von Endgeräten (EG) in mehreren Landessprachen gespeichert sind,
   wobei die Anzeigetexte jeweils an der Display-Bedienoberfläche (BOF) der Endgeräte (EG) systemgesteuert angezeigt werden,
   wobei die Display-Bedienoberflächen (BOF) der Endgeräte (EG) jeweils auf verschiedene Landessprachen umschaltbar sind,
wobei in dem Kommunikationssystem, endgerätespezifisch für jedes der Endgeräte (EG) ein die für die Display-Bedienoberfläche (BOF) dieses Endgerätes (EG) eingestellte Landessprache identifizierendes Sprachkennzeichen (SI-A) gespeichert ist,
wobei vor einer Übermittlung eines Anzeigetextes vom Kommunikationssystem zu einem der Endgeräte (EG) anhand des Sprachkennzeichens (SI-A), das für dieses Endgerät (EG) hinterlegt ist, überprüft wird, welche Landessprache für die Display-Bedienoberfläche (BOF) des Endgerätes (EG) eingestellt ist,
wobei der Anzeigetext in der für die Display-Bedienoberfläche (BOF) dieses Endgerätes (EG) eingestellten Landessprache an das Endgerät (EG) übermittelt wird, **dadurch gekennzeichnet, daß** in dem Kommunikationssystem, endgerätespezifisch für jedes der Endgeräte (EG) eine Berechtigungsinformation für eine temporäre Sprachauswahl oder eine statische Sprachauswahl hinterlegt ist.

2. Verfahren nach Anspruch 1,
   **dadurch gekennzeichnet,**
   **daß** jedem Anzeigetext ein diesen in mehreren Landessprachen identifizierendes Textkennzeichen (TK) zugeordnet ist,
   **daß** ein aktuell an einer Display-Bedienoberfläche (BOF) eines Endgerätes (EG) ausgegebener Anzeigetext zusammen mit dem Textkennzeichen (TK) in einem Display-Speicher (SP-BOF) im Kommunikationssystem gespeichert ist,
   und **daß**, falls die Landessprache für die Display-Bedienoberfläche (BOF) des Endgerätes (EG) geändert wird, der bereits angezeigte Text unter Beibehalten des Textkennzeichens (TK) in der neuen Landessprache angezeigt wird.

3. Verfahren nach Anspruch 2,
   **dadurch gekennzeichnet,**
   **daß** falls die Landessprache für die Display-Bedienoberfläche (BOF) des Endgerätes (EG) geändert wird,

   - im Kommunikationssystem ein neues, die für die Display-Bedienoberfläche (BOF) des Endgerätes (EG) neu eingestellte Landessprache identifizierendes Sprachkennzeichen (SI-N) gespeichert wird,
   - anhand des neuen Sprachkennzeichens (SI-N) ein neuer Satz von Anzeigetexten ausgewählt wird, der Anzeigetexte in der neu eingestellten Landessprache beinhaltet,
   - anhand des Textkennzeichens (TK) eines aktuell angezeigten Textes aus dem neuen Satz von Anzeigetexten, der an der Display-Bedienoberfläche (BOF) auszugebende Anzeigetext in der neu eingestellten Landessprache selektiert wird,

- und der Anzeigetext an das Endgerät (EG) übermittelt wird.

4. Verfahren nach einem der vorangegangenen Ansprüche,
**dadurch gekennzeichnet,**
**daß** das vorliegende Kommunikationssystem eine zentrale Steuerung mit einer Datenbasis (DB-CP) und mehrere Peripherieeinheiten aufweist, wobei jeder Peripherieeinheit eine bestimmte Anzahl von Endgeräten zugeordnet ist, und wobei die Information, welche Landessprache aktuell an einer Display-Bedienoberfläche (BOF) eines Endgerätes (EG) eingestellt ist, sowohl in einem Speicher der jeweiligen Peripherieeinheit, als auch in der Datenbasis (DB) der zentralen Steuerung gespeichert wird.

5. Verfahren nach einem der vorangegangenen Ansprüche,
**dadurch gekennzeichnet,**
**daß** im Kommunikationssystem endgeräteindividuell ein weiteres Sprachkennzeichen (SI-V) gespeichert wird, das die Landessprache, die für eine Display-Bedienoberfläche (BOF) eines Endgerätes (EG) standardmäßig eingestellt werden soll, identifiziert.

6. Verfahren nach einem der vorangegangenen Ansprüche,
**dadurch gekennzeichnet,**
**daß** bei Einhalten einer Anmeldevorschrift an einem, einem Teilnehmer nicht zugeordneten Endgerät, Anzeigetexte in der durch das für das dem Teilnehmer zugeordneten Endgerät gespeicherten Sprachkennzeichen (SI-A) identifizerten Landessprache an der Display-Bedienoberfläche (BOF) des Endgerätes angezeigt werden.

**Claims**

1. Method for controlling terminals (EG) under system control by display user interfaces (BOF) in a communications system,
in which display texts for the display user interface (BOF) of terminals (EG) are stored in a plurality of natural languages in the communications system,
in which the display texts are displayed in each case on the display user interface (BOF) of the terminals (EG) under system control,
in which the display user interfaces (BOF) of the terminals (EG) can each be switched to different natural languages,
in which a language identifier (SI-A) which identifies the natural language which is set for the display user interface (BOF) of this terminal (EG) is stored in the communications system in a terminal-specific fashion for each of the terminals (EG),
in which, before a display text is transferred from the communications system to one of the terminals (EG), it is checked, by reference to the language identifier (SI-A) which is stored for this terminal (EG), which natural language is set for the display user interface (BOF) of the terminal (EG),
in which the display text is transferred to the terminal (EG) in the natural language which has been set for the display user interface (BOF) of this terminal (EG),
**characterized in that** an item of authorization information for a temporary language selection or a static language selection is stored in the communications system in a terminal-specific fashion for each of the terminals (EG).

2. Method according to Claim 1, **characterized in that** each display text is assigned a text identifier (TK) which identifies it in a plurality of natural languages, **in that** a display text which has been output to a display user interface (BOF) of a terminal (EG) at any given moment is stored, together with the text identifier (TK), in a display memory (SP-BOF) in the communications system,
and **in that**, if the natural language for the display user interface (BOF) of the terminal (EG) is changed, the text which has already been displayed is displayed in the new natural language, while retaining the text identifier (TK).

3. Method according to Claim 2, **characterized in that**, if the natural language for the display user interface (BOF) of the terminal (EG) is changed,

- a new voice identifier (SI-N) which identifies the natural language which has been newly set for the display user interface (BOF) of the terminal (EG) is stored in the communications system,
- by reference to the new voice identifier (SIN), a new set of display texts which contains display texts in the newly set natural language is selected,
- by reference to the text identifier (TK) of a text which has been displayed at any given moment, the display text which is to be output on the display user interface (BOF) in the newly set natural language is selected from the new set of display texts,
- and the display text is transferred to the terminal (EG).

4. Method according to one of the preceding claims, **characterized in that** the communications system in question has a central controller with a database (DB-CP) and a plurality of peripheral units,

in which each peripheral unit is assigned a specific number of terminals,

and in which the information specifying which natural language has been set on a display user interface (BOF) of a terminal (EG) at any given moment is stored both in a memory of the respective peripheral unit and in the database (DB) of the central controller.

5. Method according to one of the preceding claims, **characterized in that** a further language identifier (SI-V) which identifies the natural language which is to be set on a standard basis for a display user interface (BOF) of a terminal (EG) is stored in the communications system in a terminal-specific fashion.

6. Method according to one of the preceding claims, **characterized in that**, when an application rule is complied with at a terminal which is not assigned to a subscriber, display texts in the natural language which is identified by means of the language identifier (SI-A) stored for the terminal assigned to the subscriber are displayed on the display user interface (BOF) of the terminal.

## Revendications

1. Procédé de commande de surfaces de commande d'affichage (BOF) de terminaux (EG) d'un système de communication, commandés par le système,

des textes d'affichage étant mémorisés dans le système de communication dans plusieurs langues nationales pour la surface de commande d'affichage (BOF) de terminaux (EG),

les textes d'affichage étant respectivement affichés sur la surface de commande d'affichage (BOF) des terminaux (EG) en étant commandés par le système,

les surfaces de commande d'affichage (BOF) des terminaux (EG) étant respectivement commutables sur différentes langues nationales,

un critère de langue (SI-A), identifiant la langue nationale paramétrée pour la surface de commande d'affichage (BOF) de ce terminal (EG), étant mémorisé dans le système de communication, de manière spécifique au terminal, pour chacun des terminaux (EG),

avant une transmission d'un texte d'affichage du système de communication vers l'un des terminaux (EG) à l'aide du critère de langue (SI-A) enregistré pour ce terminal (EG), il est vérifié quelle langue nationale est paramétrée pour la surface de commande d'affichage (BOF) du terminal (EG),

le texte d'affichage étant transmis au terminal (EG) dans la langue nationale paramétrée pour la surface de commande d'affichage (BOF) de ce terminal (EG),

**caractérisé en ce qu'**une information d'autorisation pour une sélection de langue temporaire ou une sélection de langue statique étant enregistrée, de manière spécifique au terminal, pour chacun des terminaux (EG) dans le système de communication.

2. Procédé selon la revendication 1 **caractérisé en ce que** un critère de texte (TK) identifiant le texte d'affichage en plusieurs langues nationales est attribué à chaque texte d'affichage **en ce qu'**un texte d'affichage sorti actuellement sur une surface de commande d'affichage (BOF) d'un terminal (EG) est mémorisé, ensemble avec le critère de texte (TK), dans une mémoire d'affichage (SP-BOF) du système de communication, et **en ce que**, au cas où la langue nationale est modifiée pour la surface de commande d'affichage (BOF) du terminal (EG), le texte déjà affiché est affiché en conservant le critère de texte (TK) dans la nouvelle langue nationale.

3. Procédé selon la revendication 2, **caractérisé en ce que** au cas où la langue nationale pour la surface de commande d'affichage (BOF) du terminal (EG) est modifiée,

   - un nouveau critère de langue (SI-N) identifiant la langue nationale nouvellement paramétrée pour la surface de commande d'affichage (BOF) du terminal (EG) est mémorisé dans le système de communication,
   - un nouveau jeu de textes d'affichage, qui contient des textes d'affichage dans la langue nationale nouvellement paramétrée, est sélectionné à l'aide du nouveau critère de langue (SI-N),
   - le texte d'affichage à sortir sur la surface de commande d'affichage (BOF) est sélectionné dans la langue nationale nouvellement paramétrée, à l'aide du critère de texte (TK) d'un texte affiché actuellement, à partir du nouveau jeu de textes d'affichage,
   - et le texte d'affichage est transmis au terminal (EG).

4. Procédé selon l'une quelconque des revendications précédentes, **caractérisé en ce que** le présent système de communication présente une commande centrale comprenant une base de données (DB-CP) et plusieurs unités périphériques, un certain nombre de terminaux étant affecté à chaque unité périphérique, et, l'information indiquant quelle langue nationale est actuellement paramétrée sur une surface de commande d'affichage (BOF) d'un terminal (EG) étant mémorisée aussi bien dans une mémoire de l'unité périphérique respective que dans la base de données (DB) de la commande centrale.

5.  Procédé selon l'une quelconque des revendications précédentes,
    **caractérisé en ce que**
    un critère de langue supplémentaire (SI-V) est mémorisé dans le système de communication, individuellement pour le terminal, ce critère de langue supplémentaire identifiant la langue nationale qui doit être paramétrée par défaut pour une surface de commande d'affichage (BOF) d'un terminal (EG).

6.  Procédé selon l'une quelconque des revendications précédentes,
    **caractérisé en ce que**
    en cas de respect d'une instruction d'enregistrement sur un terminal non attribué à un abonné, des textes d'affichage dans la langue nationale identifiant le critère de langue (SI-A) mémorisé au moyen du terminal attribué à l'abonné sont affichés sur la surface de commande d'affichage (BOF) du terminal.

# Fig 1

| | | |
|---|---|---|
| SP-DH-D | | ST |
| EG1 SI-A | | 1 SI deutsch |
| ⋮ | | 2 SI englisch |
| EGn SI-A | | 3 SI französisch |
| | | 4 SI italienisch |
| | | 5 SI spanisch |

TT
Sprache 5
Sprache 4
Sprache 3
Sprache 2
Sprache 1

SP-CP-S

EG1 SI-V
⋮
EGn SI-V

SP-BOF

EG1 TK
⋮
EGn TK

SP-CP-D

EG1 SI-A
⋮
EGn SI-A

DB-DH

DB-CP

# Fig 2

```
┌─────────────────────────┐          ┌─────────────────────┐          ┌─────────────────────────┐
│ 1. Displayzeile (Deutsch)│  ──────► │ Language: English   │  ──────► │ 1. Displayzeile (Englisch)│
│ 2. Displayzeile (Deutsch)│          │                     │          │ 2. Displayzeile (Englisch)│
└─────────────────────────┘          └─────────────────────┘          └─────────────────────────┘
      BOF
                          ┌───────┐                      ┌───────┐
                          │  SAT  │                      │   T   │
                          └───────┘                      └───────┘
```

# Fig 3

```
┌─────────────────────────┐     ┌─────────────────────┐     ┌─────────────────────┐
│ 1. Displayzeile (Deutsch)│ ──► │ Language: English   │ ──► │ Langue: Francais    │
│ 2. Displayzeile (Deutsch)│     │                     │     │                     │
└─────────────────────────┘     └─────────────────────┘     └─────────────────────┘
      BOF
                    ┌───────┐                   ┌───────┐                ┌───────┐
                    │  SAT  │                   │  SAT  │  ◄──           │  SAT  │
                    └───────┘                   └───────┘                └───────┘


┌─────────────────┐     ┌─────────────────┐     ┌─────────────────┐
│ Lingua: Italiano│ ──► │ Lengua: Espanol │ ──► │ Sprache: Deutsch│
└─────────────────┘     └─────────────────┘     └─────────────────┘
            ┌───────┐                 ┌───────┐                ┌───────┐
            │  SAT  │                 │  SAT  │          ◄──   │   T   │
            └───────┘                 └───────┘                └───────┘

                                            ┌─────────────────────────┐
                                            │ 1. Displayzeile (Deutsch)│
                                            │ 2. Displayzeile (Deutsch)│
                                            └─────────────────────────┘
```

# Fig 4

SAT

Kommunikationssystem

```
┌─────────────────────────┐        ┌─────────────────────────────┐
│   Meldung von DH an CP   │        │ SI-N wird in SP-CP-S        │
│                         │        │ gespeichert                 │
└─────────────────────────┘        └─────────────────────────────┘

┌─────────────────────────┐        ┌─────────────────────────────┐
│  CP ermittelt aus ST das │        │      Meldung an CP          │
│       nächste SI         │        │                             │
└─────────────────────────┘        └─────────────────────────────┘

           ┌─────────────────────────────────┐
           │  SI-N wird in SP-CP-D gespeichert │
           └─────────────────────────────────┘

           ┌─────────────────────────────────┐
           │  Displaymeldung von CP an DH mit  │
           │           SI-N und TK             │
           └─────────────────────────────────┘

           ┌─────────────────────────────────┐
           │  Speichern von SI-N in SP-DH-D und│
           │ Anzeige der aktuellen Sprache an BOF│
           └─────────────────────────────────┘
```

# Fig 5

TT

M = 300

Adressierung über TK

| | |
|---|---|
| 1 | Anzeigetexte für Landessprache 1<br><br>N = 1 |
| M | Anzeigetexte für Landessprache 2<br><br>N = 2 |
| 2M | Anzeigetexte für Landessprache 3<br><br>N = 3 |
| 3M | Anzeigetexte für Landessprache 4<br><br>N = 4 |
| 4M | Anzeigetexte für Landessprache 5<br><br>N = 5 |

TK=1 — 301
TK=2 — 302
TK=3 — 303
304
305
⋮ 306
307
308
309
TK=10 — Language: English — 310
311
312
⋮ 313
⋮
TK=300 — 600

# Fig 6

EG im Ruhezustand

SI-V ungleich SI-A ?

Nein → Ende

Ja

Berechtigungsklasse ?

temporäre Auswahl → SI-V ersetzt SI-A in SP-CP-D → Displaymeldung von CP an DH

statische Auswahl → SI-A ersetzt SI-V in SP-CP-S